(19) Europäisches Patentamt
European Patent Office
Office européen des brevets

(11) EP 4 794 047 A1

(12) **EUROPEAN PATENT APPLICATION**
published in accordance with Art. 153(4) EPC

(43) Date of publication:
**19.08.2026 Bulletin 2026/34**

(21) Application number: **24876221.3**

(22) Date of filing: **09.08.2024**

(51) International Patent Classification (IPC):
***H01M 10/0569*** *(2010.01)* ***H01M 10/054*** *(2010.01)*

(52) Cooperative Patent Classification (CPC):
**H01M 10/054; H01M 10/0569;** Y02E 60/10

(86) International application number:
**PCT/CN2024/110931**

(87) International publication number:
**WO 2025/077401 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023 CN 202311325296**

(71) Applicant: **Zhangjiagang Guotai-Huarong New Chemical Materials Co., Ltd**
**Suzhou, Jiangsu 215600 (CN)**

(72) Inventors:
- **YUAN, Jie**
**Suzhou, Jiangsu 215600 (CN)**
- **ZHANG, Yin**
**Suzhou, Jiangsu 215600 (CN)**
- **LI, Yunfei**
**Suzhou, Jiangsu 215600 (CN)**
- **GAN, Chaolun**
**Suzhou, Jiangsu 215600 (CN)**

(74) Representative: **Bryers Intellectual Property Ltd**
**Bristol & Bath Science Park**
**Dirac Crescent, Emerson's Green**
**Bristol, BS16 7FR (GB)**

(54) **ELECTROLYTE SUITABLE FOR SODIUM ION BATTERY AND SODIUM ION BATTERY**

(57) The present invention relates to an electrolyte suitable for sodium-ion batteries and a sodium-ion battery. To solve the problem of poor room-temperature cycling performance, rate performance, and high-low temperature performance of sodium-ion batteries, the present invention provides an electrolyte suitable for sodium-ion batteries, comprising an electrolyte salt, an organic solvent, and an additive, wherein the organic solvent comprises a carbonate solvent, a fluorinated carboxylate solvent and a fluorinated benzene solvent, and the carbonate solvent does not include ethylene carbonate. The present invention improves the room-temperature cycling performance, rate performance, and high/low temperature performance of sodium-ion batteries through the synergistic cooperation of the carbonate solvent, the fluorinated carboxylate solvent, and the fluorinated benzene solvent.

EP 4 794 047 A1

## Description

### TECHNICAL FIELD

The present invention relates to an electrolyte suitable for sodium-ion batteries and a sodium-ion battery.

### BACKGROUND

With the gradual depletion of traditional fossil energy sources and increasingly serious environmental problems, the development of new renewable energy has become an inevitable trend. Currently, electric vehicles and smart grid energy storage systems are developing rapidly. As an efficient energy storage technology, secondary batteries have the characteristics of fast response speed and high energy density. The limited lithium resources have become the main bottleneck restricting the large-scale energy storage applications of lithium-ion batteries. The development of sodium-ion batteries with abundant resources and environmental friendliness is of important strategic significance.

The working principle of sodium-ion batteries is the same as that of lithium-ion batteries, where sodium ions are intercalated and deintercalated between the positive and negative electrodes of the battery during the charge and discharge process.

The current commercial electrolyte system consists of sodium salts, organic solvents and functional additives. The organic solvents mainly include ethylene carbonate (EC), propylene carbonate (PC), diethyl carbonate (DEC), dimethyl carbonate (DMC), etc. Often, a single solvent is difficult to enable the battery to operate normally, and different solvents need to cooperate with each other to enable the electrolyte system to exhibit relatively ideal comprehensive performance. Among them, ethylene carbonate has become an important component of commercial electrolyte systems due to its high dielectric constant. However, ethylene carbonate has a melting point of 36.5°C, and tends to solidify or even crystallize at low temperatures, resulting in an increase in the viscosity of the electrolyte system, a decrease in conductivity, and deteriorated low-temperature performance. At the same time, ethylene carbonate is prone to oxidative decomposition with positive electrode materials at high voltage, and the by-products increase the impedance of the battery system, while the gas generated by decomposition can also lead to a decrease in safety. In contrast, propylene carbonate is a relatively ideal electrolyte solvent due to its excellent dielectric constant, good sodium salt solubility, wider liquid range, and outstanding high-voltage resistance capability. However, propylene carbonate has poor compatibility with graphite negative electrodes and is prone to intercalating between graphite layers, causing structural exfoliation of graphite materials and affecting battery performance. Moreover, at room temperature, propylene carbonate is difficult to form a stable SEI film on the surface of hard carbon (HC) negative electrodes, causing it to continuously undergo side reactions with the negative electrode, affecting the room-temperature cycle life of the battery. Therefore, sodium-ion batteries in the prior art are difficult to simultaneously achieve room-temperature cycling performance, rate performance, and high/low temperature performance.

### SUMMARY

The object of the present invention is to provide an electrolyte suitable for sodium-ion batteries, which can improve the room-temperature cycling performance, rate performance and high/low temperature performance of sodium-ion batteries.

The second object of the present invention is to provide a sodium-ion battery having excellent room-temperature cycling performance, rate performance and high/low temperature performance.

To achieve the above objects, the technical solutions adopted by the present invention are as follows:
An electrolyte suitable for sodium-ion batteries, comprising an electrolyte salt, an organic solvent and an additive, wherein the organic solvent comprises a carbonate solvent, a fluorinated carboxylate solvent and a fluorinated benzene solvent, and the carbonate solvent does not include ethylene carbonate.

Further, the carbonate solvent comprises a cyclic carbonate and a linear carbonate, and the mass ratio of the cyclic carbonate to the linear carbonate is 1:(0.8~1.5), for example, 1:0.8, 1:0.9, 1:1, 1:1.1, 1:1.2, 1:1.3, 1:1.4, or 1:1.5.

In some embodiments, the cyclic carbonate comprises propylene carbonate.

In some embodiments, the linear carbonate comprises one or more of dimethyl carbonate, diethyl carbonate, and ethyl methyl carbonate.

In some specific and preferred embodiments, the carbonate solvent comprises propylene carbonate and ethyl methyl carbonate.

Further, the fluorinated carboxylate solvent comprises one or more of methyl 2,2-difluoroacetate, ethyl 2,2-difluoroacetate, and methyl pentafluoropropionate.

Further, the fluorinated benzene solvent comprises one or more of fluorobenzene, difluorobenzene, perfluorobenzene (i.e., hexafluorobenzene), trifluorotoluene, and pentafluorotoluene.

Further, the carbonate solvent accounts for 50~75% of the total mass of the electrolyte.

Still further, the carbonate solvent accounts for 55~75% of the total mass of the electrolyte, for example, 55%, 60%, 65%, 70%, or 75%.

Further, the fluorinated carboxylate solvent accounts for 5~20% of the total mass of the electrolyte.

Still further, the fluorinated carboxylate solvent accounts for 8~12% of the total mass of the electrolyte, for example, 8%, 9%, 10%, 11%, or 12%.

Further, the fluorinated benzene solvent accounts for 5~15% of the total mass of the electrolyte.

Still further, the fluorinated benzene solvent accounts for 8~12% of the total mass of the electrolyte, for example, 8%, 9%, 10%, 11%, or 12%.

Further, the electrolyte salt comprises at least one of sodium hexafluorophosphate, sodium perchlorate, sodium difluorophosphate, sodium bis(trifluoromethanesulfonyl)imide, sodium bis(fluorosulfonyl)imide, sodium tetrafluoroborate, sodium bis(oxalato)borate, and sodium difluoro(oxalato)borate.

Further, the electrolyte salt accounts for 10~20% of the total mass of the electrolyte, more preferably 12~18%, for example, 12%, 14%, 16%, or 18%.

In some embodiments, the electrolyte salt comprises sodium hexafluorophosphate, sodium bis(fluorosulfonyl) imide, and sodium bis(trifluoromethanesulfonyl)imide.

Further, the mass ratio of the sodium hexafluorophosphate, the sodium bis(fluorosulfonyl)imide, and the sodium bis(trifluoromethanesulfonyl)imide is 1:(0.1~0.3):(0.1~0.3), more preferably 1:(0.15~0.25):(0.15~0.25).

Further, the additive comprises fluoroethylene carbonate and/or vinylene sulfate.

Further, the additive accounts for 1~5% of the total mass of the electrolyte, for example, 1%, 2%, 3%, 4%, or 5%.

Further, the organic solvent further comprises one or more of a carboxylate solvent and an ether solvent, wherein the carboxylate solvent helps to improve the low-temperature performance of the electrolyte, and the ether solvent can regulate the formation of a thinner, inorganic-component-rich layered SEI film on the surface of hard carbon, which helps to achieve higher initial coulombic efficiency, excellent cycling stability, and rate performance.

In some specific and preferred embodiments, based on the total mass of the electrolyte being 100%, the electrolyte consists of the following components:

carbonate solvent 50~75%,
fluorinated carboxylate solvent 5~20%,
fluorinated benzene solvent 5~15%,
electrolyte salt 10~20%,
additive 1~5%,

wherein the carbonate solvent comprises one or more of propylene carbonate, dimethyl carbonate, diethyl carbonate, and ethyl methyl carbonate; the fluorinated carboxylate solvent comprises one or more of methyl 2,2-difluoroacetate, ethyl 2,2-difluoroacetate, and methyl pentafluoropropionate; the fluorinated benzene solvent comprises one or more of fluorobenzene, difluorobenzene, perfluorobenzene, trifluorotoluene, and pentafluorotoluene; the electrolyte salt comprises at least one of sodium hexafluorophosphate, sodium perchlorate, sodium difluorophosphate, sodium bis(trifluoromethanesulfonyl)imide, sodium bis(fluorosulfonyl)imide, sodium tetrafluoroborate, sodium bis(oxalato)borate, and sodium difluoro(oxalato)borate; and the additive comprises fluoroethylene carbonate and/or vinylene sulfate.

The second object of the present invention is to provide a sodium-ion battery, comprising a positive electrode, a negative electrode, and a separator, wherein the sodium-ion battery further comprises the electrolyte as described above.

Preferably, the active material of the negative electrode is hard carbon.

Preferably, the active material of the negative electrode may also be an alloy.

Due to the adoption of the above technical solutions, the present invention has the following advantages over the prior art:
The present invention improves the room-temperature cycling performance, rate performance, and high/low temperature performance of sodium-ion batteries through the synergistic cooperation of the carbonate solvent, the fluorinated carboxylate solvent, and the fluorinated benzene solvent.

## DETAILED DESCRIPTION OF THE EMBODIMENTS

The present invention is further described below in conjunction with examples. However, the present invention is not limited to the following examples. The implementation conditions used in the examples can be further adjusted according to the different requirements of specific use, and the implementation conditions not specified are conventional conditions in the industry. The technical features involved in the various embodiments of the present invention can be combined with each other as long as they do not conflict with each other.

Unless otherwise specified, EC in the present invention refers to ethylene carbonate, PC refers to propylene

carbonate, DEC refers to diethyl carbonate, EMC refers to ethyl methyl carbonate, DFMA refers to methyl 2,2-difluoroacetate (CAS No.: 433-53-4), DFEA refers to ethyl 2,2-difluoroacetate (CAS No.: 1550-44-3), MA refers to methyl acetate, EA refers to ethyl acetate, FB refers to fluorobenzene, PFB refers to pentafluorotoluene (CAS No.: 771-56-2), 3F-MB refers to trifluorotoluene (CAS No.: 98-08-8), $NaPF_6$ refers to sodium hexafluorophosphate, NaFSI refers to sodium bis(fluorosulfonyl)imide, NaTFSI refers to sodium bis(trifluoromethanesulfonyl)imide, FEC refers to fluoroethylene carbonate, and DTD refers to vinylene sulfate.

The raw materials involved in the following examples and comparative examples are all commercially available products.

According to the components and proportions shown in Table 1 below, the electrolytes were prepared in a glove box.

**Table 1**

| | Organic solvent/wt% | | | | | | | | | | | Electrolyte salt/wt% | | | Additive/wt % | |
|---|---|---|---|---|---|---|---|---|---|---|---|---|---|---|---|---|
| | EC | PC | DEC | EMC | DFMA | DFEA | MA | EA | FB | PFB | 3F - MB | NaP $F_6$ | NaFSI | NaTFSI | FEC | DTD |
| Example 1 | | 30 | | 38 | | 10 | | | 5 | | | 14 | | | 2 | 1 |
| Example 2 | | 30 | | 38 | | 10 | | | | 5 | | 14 | | | 2 | 1 |
| Example 3 | | 30 | | 38 | | 10 | | | | | 5 | 14 | | | 2 | 1 |
| Example 4 | | 30 | | 33 | | 10 | | | | | 10 | 14 | | | 2 | 1 |
| Example 5 | | 30 | | 28 | | 10 | | | | | 15 | 14 | | | 2 | 1 |
| Example 6 | | 30 | | 33 | 10 | | | | | | 10 | 14 | | | 2 | 1 |
| Example 7 | | 30 | | 33 | | 10 | | | | | 10 | 10 | 2 | 2 | 2 | 1 |
| Example 8 | | 30 | | 33 | | 15 | | | | | 5 | 10 | 2 | 2 | 2 | 1 |
| Example 9 | | 30 | | 38 | | 5 | | | | | 10 | 10 | 2 | 2 | 2 | 1 |
| Example 10 | | 30 | | 38 | | 5 | | | | | 10 | 10 | 4 | 0 | 2 | 1 |
| Example 11 | | 30 | | 38 | | 5 | | | | | 10 | 10 | 0 | 4 | 2 | 1 |
| Comparative Example 1 | 25 | 5 | | 53 | | | | | | | | 14 | | | 2 | 1 |
| Comparative Example 2 | 15 | 15 | | 53 | | | | | | | | 14 | | | 2 | 1 |
| Comparative Example 3 | | 30 | | 48 | | | | | 5 | | | 14 | | | 2 | 1 |
| Comparative Example 4 | | 30 | | 48 | | | | | | 5 | | 14 | | | 2 | 1 |
| Comparative Example 5 | | 30 | | 48 | | | | | | | 5 | 14 | | | 2 | 1 |
| Comparative Example 6 | | 30 | 53 | | | | | | | | | 14 | | | 2 | 1 |
| Comparative Example 7 | | 30 | | 53 | | | | | | | | 14 | | | 2 | 1 |
| Comparative Example 8 | | 30 | | 43 | | | 10 | | | | | 14 | | | 2 | 1 |
| Comparative Example 9 | | 30 | | 43 | 10 | | | | | | | 14 | | | 2 | 1 |
| Comparative Example 10 | | 30 | | 43 | | | | 10 | | | | 14 | | | 2 | 1 |
| Comparative Example 11 | | 30 | | 43 | | 10 | | | | | | 14 | | | 2 | 1 |

After assembling the electrolytes of the above examples and comparative examples into sodium-ion batteries respectively, the performance was measured, and the measurement results are shown in Table 2. Among them, layered oxide $NaNi_{1/3}Fe_{1/3}Mn_{1/3}O_2$ was used as the positive electrode material, hard carbon was used as the negative electrode material, aluminum foil was used as the current collectors for both positive and negative electrodes, and PP was used as the separator. The assembly methods of the positive electrode, negative electrode and sodium-ion battery were referred to the prior art, and no specific limitation is made in the present application.

**Table 2**

| | Capacity retention rate after 500Z cycles at 25°C, 1.0C/% | Capacity retention rate at 10C rate/% | Low-temperature (-40°C) 1.0C discharge efficiency/% | Battery capacity retention rate after storage at high temperature (85°C) for 4h/% | Battery swelling rate after storage at high temperature (85°C) for 4h/% |
|---|---|---|---|---|---|
| Example 1 | 79 | 62 | 72 | 78 | 35 |
| Example 2 | 82 | 68 | 75 | 81 | 32 |
| Example 3 | 85 | 72 | 78 | 85 | 27 |
| Example 4 | 93 | 85 | 88 | 90 | 22 |
| Example 5 | 79 | 72 | 81 | 79 | 29 |
| Example 6 | 92 | 86 | 87 | 89 | 26 |
| Example 7 | 95 | 91 | 93 | 93 | 18 |
| Example 8 | 86 | 82 | 87 | 88 | 22 |
| Example 9 | 81 | 83 | 87 | 86 | 23 |
| Example 10 | 76 | 77 | 85 | 81 | 29 |
| Example 11 | 75 | 73 | 85 | 82 | 31 |
| Comparative Example 1 | 29 | 18 | 25 | 32 | 86 |
| Comparative Example 2 | 28 | 19 | 32 | 35 | 85 |
| Comparative Example 3 | 25 | 18 | 30 | 30 | 82 |
| Comparative Example 4 | 26 | 21 | 25 | 28 | 83 |
| Comparative Example 5 | 26 | 26 | 27 | 20 | 81 |
| Comparative Example 6 | 32 | 22 | 18 | 39 | 78 |
| Comparative Example 7 | 59 | 42 | 45 | 51 | 66 |
| Comparative Example 8 | 63 | 51 | 53 | 58 | 61 |
| Comparative Example 9 | 62 | 48 | 51 | 62 | 55 |
| Comparative Example 10 | 62 | 55 | 62 | 62 | 54 |
| Comparative Example 11 | 68 | 59 | 69 | 71 | 39 |

The test method for 25°C 1.0C cycle 500Z is: under room temperature (25°C) conditions, charge the sodium-ion battery to 4.0V with a constant current of 1.0C, then charge at a constant voltage of 4.0V until the current reaches 0.05C; and discharge at a constant current of 1.0C to 2.0V, performing 500 cycles accordingly.

Capacity retention rate after 500Z cycles at 25°C,1.0C/% = discharge capacity of the 500th cycle/discharge capacity of the first cycle × 100%.

The test method for 10C rate performance is: under room temperature (25°C) conditions, charge the sodium-ion battery to 4.0V with a constant current of 0.5C and discharge to 2.0V with a constant current of 0.5C, performing 5 cycles accordingly, then allow the sodium-ion battery to stand for 10 min; then charge the sodium-ion battery to 4.0V with a constant current of 1C, and discharge to 2.75V with a current of 1C, performing 5 cycles in sequence; then allow the

sodium-ion battery to stand for 10 min; then charge the sodium-ion battery to 4.0V with a constant current of 10C, and discharge to 2.0V with a constant current of 10C, performing 5 cycles accordingly.

Capacity retention rate at 10C rate/% = discharge capacity of the last cycle at 10C discharge/discharge capacity of the first cycle at 10C $\times$ 100%.

The test method for low-temperature (-40°C) 1.0C discharge efficiency is: under room temperature (25°C) conditions, charge the sodium-ion battery to 4.0V with a constant current of 1.0C, then charge at a constant voltage of 4.0V until the current reaches 0.05C; then discharge at a constant current of 1.0C to 2.0V under -40°C conditions.

Low-temperature (-40°C) 1.0C discharge efficiency/% = capacity discharged at a constant current of 1.0C to 2.0V under -40°C conditions / capacity charged to 4.0V at 1.0C under 25°C conditions $\times$ 100%.

The test method for battery capacity retention rate after storage at high temperature (85°C) for 4h is: under room temperature (25°C) conditions, charge the sodium-ion battery to 4.0V with a constant current of 0.5C; place the sodium-ion battery in an 85°C thermostat and allow it to stand for 4 hours. Under room temperature (25°C) conditions, then discharge at a constant current of 1.0C to a voltage of 2.0V.

Battery capacity retention rate after storage at high temperature (85°C) for 4h/% = discharge capacity/charge capacity $\times$ 100%.

The test method for battery swelling rate after storage at high temperature (85°C) for 4h is: under room temperature (25°C) conditions, record the thickness of the sodium battery; place the sodium-ion battery in an 85°C thermostat and allow it to stand for 4 hours. After removing the sodium battery, record the thickness of the sodium battery again.

Battery swelling rate after storage at high temperature (85°C) for 4h/% = (thickness of sodium battery after storage - thickness of sodium battery before storage)/thickness of sodium battery before storage $\times$ 100%.

By comparing the examples with the comparative examples, it is found that the sodium-ion battery of the present application has better room-temperature cycling performance, rate performance, and high/low temperature performance. The introduction of fluorinated carboxylate and fluorinated benzene changes the solvation structure of the electrolyte and forms an NaF-rich interfacial film, both of which together inhibit the dissolution of the interfacial film in the electrolyte. Meanwhile, the introduction of fluorinated carboxylate and fluorinated benzene weakens the affinity of the coordinating solvent for $Na^+$, which can promote the desolvation process of $Na^+$, thereby improving the room-temperature cycling performance, rate performance, and high/low temperature performance of sodium-ion batteries.

It is found from Comparative Examples 1, 2, and 3 that when EC in the electrolyte is replaced by PC or FB, the low-temperature performance and high-temperature gas generation of sodium-ion batteries are slightly improved;

By comparing Examples 3, 4, and 5, it is found that as the content of fluorinated benzene in the electrolyte increases, the room-temperature cycling performance, rate performance, and high/low temperature performance of the battery first improve and then decrease. Preferably, fluorinated benzene accounts for 5~15% of the total mass of the electrolyte, and more preferably 8~12%.

By comparing Examples 7, 8, and 9, it is found that as the content of fluorinated carboxylate in the electrolyte increases, the room-temperature cycling performance, rate performance, and high/low temperature performance of the battery first improve and then decrease. Preferably, fluorinated carboxylate accounts for 5~20% of the total mass of the electrolyte, and more preferably 8~15%.

By comparing Examples 1, 2, and 3, it is found that adding 3F-MB to the electrolyte results in better improvement in the room-temperature cycling performance, rate performance, and high/low temperature performance of the battery compared to adding FB and PFB.

The above is a detailed description of the present invention, which aims to enable those skilled in the art to understand and practice the contents of the present invention, and is not intended to limit the protection scope of the present invention. Any equivalent changes or modifications made according to the spirit of the present invention shall be covered within the protection scope of the present invention.

## Claims

1. An electrolyte suitable for sodium-ion batteries, comprising an electrolyte salt, an organic solvent, and an additive, **characterized in that**: the organic solvent comprises a carbonate solvent, a fluorinated carboxylate solvent, and a fluorinated benzene solvent, and the carbonate solvent does not include ethylene carbonate.

2. The electrolyte according to claim 1, **characterized in that**: the carbonate solvent comprises a cyclic carbonate and a linear carbonate, and the mass ratio of the cyclic carbonate to the linear carbonate is 1:(0.8~1.5).

3. The electrolyte according to claim 2, **characterized in that**: the cyclic carbonate comprises propylene carbonate; and/or the linear carbonate comprises one or more of dimethyl carbonate, diethyl carbonate, and ethyl methyl carbonate.

4. The electrolyte according to claim 1, **characterized in that**: the fluorinated carboxylate solvent comprises one or more of methyl 2,2-difluoroacetate, ethyl 2,2-difluoroacetate, and methyl pentafluoropropionate;
the fluorinated benzene solvent comprises one or more of fluorobenzene, difluorobenzene, perfluorobenzene, trifluorotoluene, and pentafluorotoluene.

5. The electrolyte according to any one of claims 1 to 4, **characterized in that**: the carbonate solvent accounts for 50~75% of the total mass of the electrolyte, the fluorinated carboxylate solvent accounts for 5~20% of the total mass of the electrolyte, and the fluorinated benzene solvent accounts for 5~15% of the total mass of the electrolyte.

6. The electrolyte according to claim 5, **characterized in that**: the carbonate solvent accounts for 55~75% of the total mass of the electrolyte, the fluorinated carboxylate solvent accounts for 8~12% of the total mass of the electrolyte, and the fluorinated benzene solvent accounts for 8~12% of the total mass of the electrolyte.

7. The electrolyte according to claim 1, **characterized in that**: the electrolyte salt comprises at least one of sodium hexafluorophosphate, sodium perchlorate, sodium difluorophosphate, sodium bis(trifluoromethanesulfonyl)imide, sodium bis(fluorosulfonyl)imide, sodium tetrafluoroborate, sodium bis(oxalato)borate, and sodium difluoro(oxalato) borate.

8. The electrolyte according to claim 1, **characterized in that**: the electrolyte salt accounts for 10~20% of the total mass of the electrolyte.

9. The electrolyte according to claim 8, **characterized in that**: the electrolyte salt comprises sodium hexafluorophosphate, sodium bis(fluorosulfonyl)imide, and sodium bis(trifluoromethanesulfonyl)imide, and the mass ratio of the sodium hexafluorophosphate, the sodium bis(fluorosulfonyl)imide, and the sodium bis(trifluoromethanesulfonyl) imide is 1:(0.1~0.3):(0.1~0.3).

10. The electrolyte according to claim 1, **characterized in that**: the additive comprises fluoroethylene carbonate and/or vinylene sulfate.

11. The electrolyte according to claim 1, **characterized in that**: the additive accounts for 1~5% of the total mass of the electrolyte.

12. The electrolyte according to claim 1, **characterized in that**: the organic solvent further comprises one or more of a carboxylate solvent and an ether solvent.

13. The electrolyte according to claim 1, **characterized in that**: based on the total mass of the electrolyte being 100%, the electrolyte consists of the following components:

    carbonate solvent 50~75%,
    fluorinated carboxylate solvent 5~20%,
    fluorinated benzene solvent 5~15%,
    electrolyte salt 10~20%,
    additive 1~5%,

    wherein the carbonate solvent comprises one or more of propylene carbonate, dimethyl carbonate, diethyl carbonate,

and ethyl methyl carbonate; the fluorinated carboxylate solvent comprises one or more of methyl 2,2-difluoroacetate, ethyl 2,2-difluoroacetate, and methyl pentafluoropropionate; the fluorinated benzene solvent comprises one or more of fluorobenzene, difluorobenzene, perfluorobenzene, trifluorotoluene, and pentafluorotoluene; the electrolyte salt comprises at least one of sodium hexafluorophosphate, sodium perchlorate, sodium difluorophosphate, sodium bis(trifluoromethanesulfonyl)imide, sodium bis(fluorosulfonyl)imide, sodium tetrafluoroborate, sodium bis(oxalato) borate, and sodium difluoro(oxalato)borate; and the additive comprises fluoroethylene carbonate and/or vinylene sulfate.

**14.** A sodium-ion battery, comprising a positive electrode, a negative electrode, and a separator, **characterized in that**: the sodium-ion battery further comprises the electrolyte according to any one of claims 1 to 13.

**15.** The sodium-ion battery according to claim 14, **characterized in that**: an active material of the negative electrode is hard carbon.

## INTERNATIONAL SEARCH REPORT

International application No.
**PCT/CN2024/110931**

**A. CLASSIFICATION OF SUBJECT MATTER**

H01M10/0569(2010.01)i；H01M10/054(2010.01)i

According to International Patent Classification (IPC) or to both national classification and IPC

**B. FIELDS SEARCHED**

Minimum documentation searched (classification system followed by classification symbols)

H01M10/-

Documentation searched other than minimum documentation to the extent that such documents are included in the fields searched

Electronic data base consulted during the international search (name of data base and, where practicable, search terms used)

CNKI, CNTXT, ENTXTC, STN: 低温, 二氟甲酯, 二氟乙酯, 氟苯, 氟代, 氟代乙酸, 氟代乙酸酯, 氟代羧酸酯, 高温, 钠离子, 三氟甲苯, 三氟甲基苯, 五氟丙酸甲酯, 乙酸, 羧酸, benzotrifluoride, trifluoroethylene, sodium-ion battery, PC, DFMA.DFEA, FB, PFB

**C. DOCUMENTS CONSIDERED TO BE RELEVANT**

| Category* | Citation of document, with indication, where appropriate, of the relevant passages | Relevant to claim No. |
|---|---|---|
| Y | CN 114069051 A (TIANJIN ZHONGDIAN NEW ENERGY RESEARCH INSTITUTE CO., LTD.) 18 February 2022 (2022-02-18)<br>description, paragraphs 5-14 and 20-21 | 1-15 |
| Y | CN 115275354 A (HUAZHONG UNIVERSITY OF SCIENCE AND TECHNOLOGY) 01 November 2022 (2022-11-01)<br>description, paragraph 33 | 1-15 |
| A | CN 109273767 A (SHANSHAN ADVANCED MATERIALS (QUZHOU) CO., LTD.) 25 January 2019 (2019-01-25)<br>description, paragraphs 59-62 | 1-15 |
| A | CN 114725520 A (NANTONG QUANNUO NEW ENERGY MATERIAL TECHNOLOGY CO., LTD.) 08 July 2022 (2022-07-08)<br>description, paragraph 23 | 1-15 |
| A | CN 115692857 A (BEIJING INSTITUTE OF TECHNOLOGY) 03 February 2023 (2023-02-03)<br>embodiment 1, and description, paragraph 109 | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 October 2024** | **25 October 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/110931**

**C. DOCUMENTS CONSIDERED TO BE RELEVANT**

| Category* | Citation of document, with indication, where appropriate, of the relevant passages | Relevant to claim No. |
|---|---|---|
| A | MA, Mengying et al. "Solvent Reorganization and Additives Synergistically Enable High-Performance Na-Ion Batteries" *ACS Energy Letters,* Vol. 8, 12 December 2022 (2022-12-12), pages 477-485 abstract, and experimental section | 1-15 |

Form PCT/ISA/210 (second sheet) (July 2022)

**INTERNATIONAL SEARCH REPORT**
**Information on patent family members**

International application No.
**PCT/CN2024/110931**

| Patent document cited in search report | Publication date (day/month/year) | Patent family member(s) | Publication date (day/month/year) |
|---|---|---|---|
| CN 114069051 A | 18 February 2022 | None | |
| CN 115275354 A | 01 November 2022 | None | |
| CN 109273767 A | 25 January 2019 | None | |
| CN 114725520 A | 08 July 2022 | None | |
| CN 115692857 A | 03 February 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *CHEMICAL ABSTRACTS*, 433-53-4
- *CHEMICAL ABSTRACTS*, 1550-44-3
- *CHEMICAL ABSTRACTS*, 771-56-2
- *CHEMICAL ABSTRACTS*, 98-08-8